Europäisches Patentamt

European Patent Office

Office européen des brevets

(19)

(11) Numéro de publication : **0 025 393**
**B1**

(12) **FASCICULE DE BREVET EUROPÉEN**

(45) Date de publication du fascicule du brevet :
04.07.84

(51) Int. Cl.³ : **G 21 C   3/34**

(21) Numéro de dépôt : **80401259.9**

(22) Date de dépôt : **03.09.80**

(54) **Dispositif de fixation d'un ressort sur une grille d'espacement d'éléments combustibles de réacteurs nucléaires.**

(30) Priorité : **06.09.79 FR 7922311**

(43) Date de publication de la demande :
**18.03.81 Bulletin 81/11**

(45) Mention de la délivrance du brevet :
**04.07.84 Bulletin 84/27**

(84) Etats contractants désignés :
**BE DE GB IT NL SE**

(56) Documents cités :
**FR-A- 2 397 042**

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **Feutrel, Claude**
**105, Grande Rue**
**F-91430 Vauhallan (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention a pour objet un dispositif de fixation d'un ressort sur une grille d'espacement d'éléments combustibles de réacteurs nucléaires.

De telles grilles ont pour rôle de réaliser l'espacement d'un faisceau d'éléments combustibles nucléaires gainés dans un assemblage de réacteur nucléaire, ces éléments devant être maintenus parallèles entre eux et selon un réseau déterminé, en assurant en outre un appui élastique de ces éléments selon différentes régions successives réparties selon leur longueur afin, en particulier, d'éviter leur vibration sous l'effet de la circulation d'un milieu liquide de refroidissement s'écoulant à leur contact.

On connaît déjà de nombreuses réalisations de grilles d'espacement du genre décrit ci-dessus, notamment constituées au moyen d'un montage formé de deux familles de tôles ajourées, respectivement parallèles dans chaque famille et perpendiculaires d'une famille à l'autre, ces tôles étant échancrées à intervalles réguliers de façon à permettre leur emboîtement mutuel, en délimitant ainsi des alvéoles de section carrée, traversés chacun par un élément du faisceau. Pour assurer l'appui élastique requis sur les éléments du faisceau, les tôles sont convenablement découpées et embouties de façon à comporter vers l'intérieur de chaque alvéole des bossages en relief et des languettes formant ressorts, chaque élément combustible dans un alvéole étant appliqué par un ressort contre deux appuis fixes prévus sur une des tôles sous l'effet de la languette formant ressort ménagée dans la tôle parallèle opposée.

Un exemple de réalisation d'une telle grille d'espacement est décrit dans le document FR-A-2 397 042 déposé le 7 juillet 1977 au nom du Commissariat à l'Energie Atomique pour « Grille d'espacement pour un faisceau de crayons combustibles dans un assemblage de réacteur nucléaire ». Cette grille comporte des languettes formant ressorts présentant un profil en zig-zag et faisant saillie dans deux alvéoles adjacents. La tôle de la grille comporte de larges évidements afin de permettre le passage des bossages en saillie de la languette formant ressort. Pour ce type de grille, les extrémités des languettes peuvent coulisser librement consécutivement aux efforts exercés par les éléments combustibles.

Cependant, de telles grilles de maintien ne comportent pas de guidage latéral des ressorts. Il en résulte un déplacement relatif du ressort sur la gaine de l'élément combustible, qui peut conduire à sa rupture.

L'invention résout ce problème grâce à la présence d'un guidage latéral du ressort. Le mouvement relatif de l'élément par rapport au crayon est ainsi éliminé. Les risques consécutifs d'une rupture de gaine sont donc réduits.

Plus précisément, selon la présente invention, le dispositif de fixation pour un ressort de maintien d'élément combustible de réacteurs nucléaires, ce ressort étant de forme allongée, chacun desdits éléments combustibles nucléaires étant maintenu par au moins un ressort contre au moins un appui rigide formé dans la paroi d'un alvéole traversé par ledit élément combustible, lesdits alvéoles étant formés par l'intersection de deux familles de tôles respectivement parallèles dans chaque famille et perpendiculaires d'une famille à l'autre, l'ensemble des deux familles de tôles constituant la grille, ces tôles comportant des paires de pontets de maintien du ressort contre chacune des tôles, se caractérise en ce qu'il est muni de deux autres pontets de maintien constituant des butées pour l'arrêt en translation longitudinale du ressort, un double embouti pratiqué dans la tôle aux abords de chaque pontet de maintien assurant un guidage en translation latérale du ressort.

Le dispositif de fixation selon la présente invention comporte une variante de réalisation dans le cas de plaques périphériques de la grille de maintien. En effet, dans l'intervalle qui sépare les éléments combustibles situés en bordure de deux grilles adjacentes, on trouve évidemment deux tôles périphériques. Comme le pas entre les éléments combustibles est constant dans l'ensemble du cœur, il est nécessaire de tenir compte de l'épaisseur de la tôle supplémentaire. A cette fin, le dispositif de fixation d'un ressort destiné à une plaque périphérique d'une grille d'espacement d'éléments combustibles de réacteur nucléaire est modifié en ce que lesdits pontets de maintien sont remplacés chacun par deux languettes rabattables après la mise en place du ressort et en ce que les doubles emboutis de guidage sont remplacés chacun par au moins une encoche, d'une largeur égale à celle du ressort, pratiquée dans la tôle dans le sens de l'axe longitudinal du ressort guidant en translation latérale ledit ressort d'une manière précise.

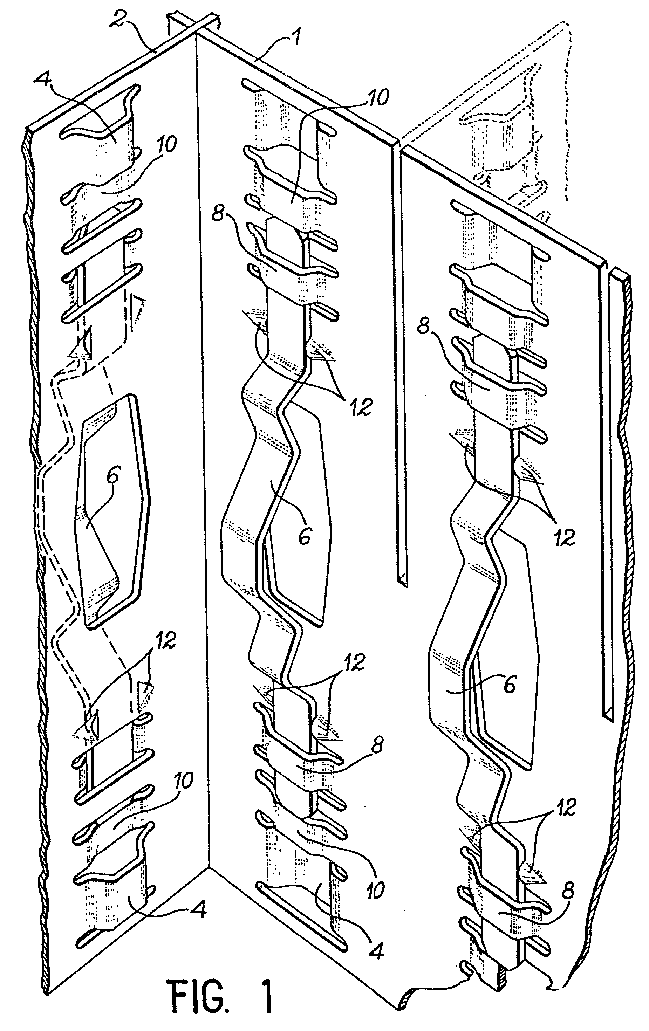

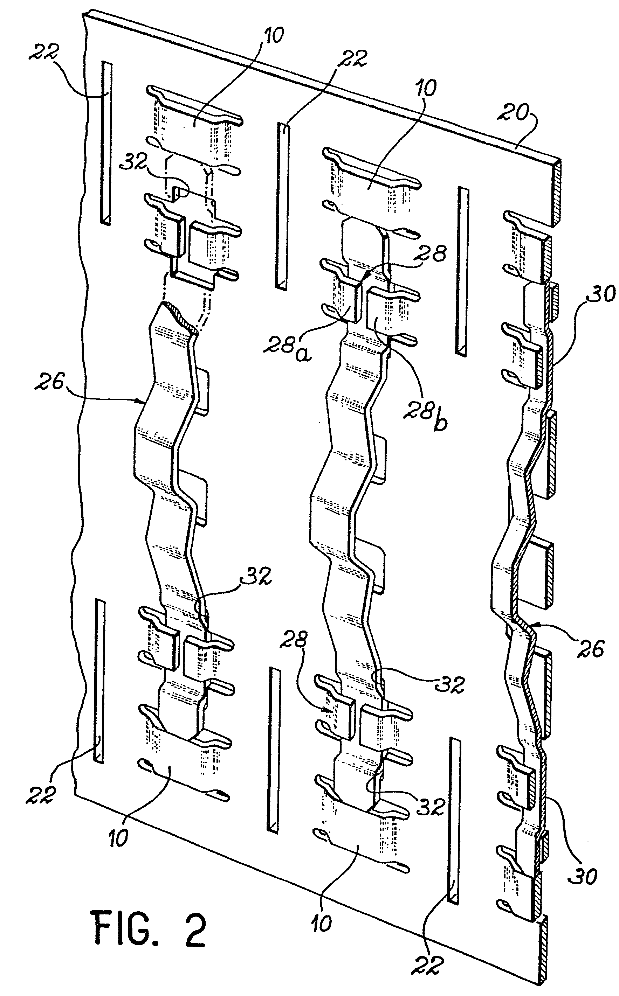

De toute façon, l'invention sera mieux comprise à la lecture de la description qui suit d'un exemple donné à titre purement indicatif, mais non limitatif de réalisation de l'invention. La description se réfère aux figures 1 et 2 annexées sur lesquelles on a représenté :

sur la figure 1, une vue en perspective de la fixation de ressorts sur des tôles constituant une grille d'espacement d'éléments combustibles de réacteur nucléaire par un dispositif selon la présente invention ;

la figure 2, une variante de réalisation du dispositif selon la présente invention adapté à une plaque périphérique d'une grille d'espacement d'éléments combustibles.

On sait que les éléments combustibles constituant le cœur d'un réacteur nucléaire, notamment d'un réacteur à eau sous pression sont balayés par un courant d'eau de refroidissement. C'est la raison pour laquelle on maintient ces éléments combustibles à intervalles réguliers par des grilles d'espacement. De telles grilles d'espacement comportent un cadre extérieur formé de plaques latérales réunies l'une à l'autre par leurs extrémités en contact au moyen de points de soudure ou par tout autre moyen approprié. A l'intérieur du cadre formé par les plaques latérales, sont montées deux familles de tôles parallèles les unes aux autres dans une même famille et perpendiculaires entre elles d'une famille à l'autre, de telle sorte qu'elles délimitent ainsi une série d'alvéoles dans lesquelles s'engagent les éléments combustibles du faisceau. On a représenté sur la figure 1 de telles tôles transversales respectivement 1 et 2, perpendiculaires entre elles et délimitant une série d'alvéoles dans lesquelles s'engagent les éléments combustibles du faisceau non représenté sur cette figure. A l'intérieur de chaque alvéole, on trouve des bossages rigides tels que 4 sur lesquels les éléments combustibles sont maintenus en appui par la force exercée par le ressort de maintien fixé sur la paroi de l'alvéole opposé aux bossages 4. Sur la figure 1, on a désigné par la référence 6 de tels ressorts de maintien. Le ressort 6 est engagé à chacune de ses extrémités dans un pontet 8, dit pontet de maintien, pratiqué dans l'épaisseur des tôles telles que 1 et 2 de la grille. Extérieurement aux pontets de maintien 8, on trouve des pontets 10 également pratiqués dans la tôle délimitant l'alvéole, ces pontets 10 constituant des butées pour l'arrêt en translation du ressort 6.

Une caractéristique importante du dispositif de fixation selon la présente invention est constituée par le guidage latéral du ressort. En effet, selon ce dispositif, les fonctions de maintien du ressort 6 contre la plaque de tôle constituant la paroi de l'alvéole et son guidage latéral sont réalisées séparément. A cette fin, on a réalisé un double embouti 12 dans la tôle, à proximité de chacun des pontets de maintien 8. Cette disposition permet le guidage du ressort 6 sur toute son épaisseur entre deux faces bien parallèles au plan de ce dernier. Ainsi, le ressort 6 est guidé plus précisément. En effet, un emboutissage tel que 8 présente forcément des angles arrondis et ne permet par conséquent pas d'assurer le guidage du ressort 6 sur toute son épaisseur.

Une autre caractéristique importante est constituée par le fait que les extrémités des ressorts 6 sont en butée contre les pontets 10. En effet, ce sont ces butées qui permettent d'équilibrer les efforts exercés par l'élément combustible.

Le montage d'un ressort tel que 6 à l'intérieur du dispositif de fixation selon la présente invention se fait de la manière suivante :

— on introduit l'une des extrémités du ressort 6 dans un pontet, par exemple le pontet supérieur, le pontet 10 constituant une butée pour l'arrêt en translation du ressort 6 n'ayant pas encore été formé, de manière à permettre d'engager suffisamment l'extrémité supérieure du ressort 6 pour pouvoir introduire facilement son extrémité inférieure sous le deuxième pontet de maintien 8 ;

— on introduit l'extrémité inférieure du ressort 6 sous le pontet de maintien 8 et on l'engage en la faisant glisser jusqu'à ce qu'elle soit arrêtée en translation par le pontet 10, ce pontet ayant été formé au préalable ;

— le ressort 6 étant alors dans sa position définitive, on forme le pontet supérieur 10 afin de l'immobiliser dans cette position.

Le dispositif de fixation selon la présente invention comporte une variante de réalisation dans le cas des plaques périphériques de la grille de maintien des éléments combustibles. En effet, le cœur du réacteur nucléaire comporte de nombreux éléments combustibles maintenus parallèles entre eux par un ensemble de grilles de maintien similaires. Dans l'intervalle qui sépare les éléments combustibles situés en bordure de deux grilles adjacentes, on trouve évidemment deux tôles périphériques. Comme le pas entre les éléments combustibles est constant dans l'ensemble du cœur, il est nécessaire de tenir compte de l'épaisseur de la tôle supplémentaire. On a représenté sur la figure 2 une variante de réalisation du dispositif de fixation d'un ressort sur une grille d'espacement d'éléments combustibles de réacteur nucléaire selon la présente invention adapté au cas d'une plaque périphérique de la grille de maintien.

Sur cette figure 2, la référence 20 désigne une plaque périphérique d'une grille de maintien. On a pratiqué dans l'épaisseur de cette tôle 20 des évidements 22. A l'intérieur de ces évidements 22 s'engage une série de tôles non représentées sur la figure 2, délimitant des alvéoles semblables à ceux décrits en référence à la figure 1. Cependant, comme le pas entre les éléments combustibles dans l'ensemble du cœur est constant, la section de ces alvéoles n'est pas carrée, mais rectangulaire, pour tenir compte de l'épaisseur de la tôle supplémentaire. Afin de compenser cette différence, qui est égale à une demi-épaisseur de tôle, dans chacun des deux alvéoles contigus, on utilise un ressort de maintien 26, qui diffère par son profil du ressort 6 précédemment décrit. En particulier, afin de permettre une flèche suffisante du ressort 26, une fois l'élément combustible en place, il est nécessaire de réduire la protubérance constituée par le pontet de maintien 8 décrit en référence à la figure 1. A cette fin, le pontet de maintien 28 pour une plaque de grille périphérique est constitué de deux languettes 28a, 28b rabattables après la mise en place du ressort 26. L'épaisseur du pontet 28 reste en partie comprise dans le profil de la tôle 20. Pour permettre cela, le ressort 26 présente une forme particulière. La demi-coupe longitudinale de l'un des trois ressorts 26 représentée sur la figure 2 permet d'observer cette forme dans la zone repérée 30.

Les pontets 10 constituant des butées arrêtant en translation le ressort 26 sont identiques à ceux qui ont été décrits en référence à la figure 1.

Le guidage latéral du ressort 26 est assuré par les flancs de l'encoche 32 pratiquée dans la tôle 20. La figure 2 montre la forme de cette encoche.

Pour la mise en place du ressort 26, il n'est pas nécessaire que l'un des deux pontets 10 soit formé après la mise en place du ressort, ceci grâce aux languettes rabattables 28a et 28b. Par conséquent, les pontets 10 peuvent être formés préalablement.

**Revendications**

1. Dispositif de fixation d'un ressort sur une grille d'espacement d'éléments combustibles de réacteurs nucléaires, ce ressort (6) étant de forme allongée, chacun desdits éléments combustibles nucléaires étant maintenu par au moins un ressort (6) contre au moins un appui rigide formé dans la paroi d'un alvéole traversé par ledit élément combustible, lesdits alvéoles étant formés par l'intersection de deux familles de tôles (1, 2) respectivement parallèles dans chaque famille et perpendiculaires d'une famille à l'autre, l'ensemble des deux familles de tôles (1, 2) constituant la grille, ces tôles comportant des paires de pontets (8) de maintien du ressort (6) contre chacune des tôles, dispositif caractérisé en ce qu'il est pourvu de deux autres pontets (10), extérieurs aux pontets de maintien, constituant des butées pour l'arrêt en translation longitudinale du ressort (6), un double embouti (12) pratiqué dans la tôle aux abords de chaque pontet de maintien (8) assurant un guidage en translation latérale du ressort (6).

2. Dispositif de fixation d'un ressort selon la revendication 1, destiné à une plaque périphérique d'une grille d'espacement d'éléments combustibles de réacteur nucléaire, et modifié en ce que lesdits pontets de maintien sont remplacés chacun par deux languettes (28a, 28b) rabattables après la mise en place du ressort, et que les doubles emboutis de guidage sont remplacés chacun par au moins une encoche (32) d'une largeur égale à celle du ressort (6), pratiquée dans la tôle dans le sens de l'axe longitudinal du ressort (6) guidant en translation latérale par ses flancs ledit ressort d'une manière précise.

3. Dispositif de fixation d'un ressort selon la revendication 2, caractérisé en ce qu'il comporte deux encoches (32) pratiquées dans la tôle constituant la paroi de l'alvéole, de part et d'autre de l'ouverture résultant du découpage des deux languettes rabattables.

**Claims**

1. Apparatus for fixing a spring to a spacer grid for fuel elements of nuclear reactors, said spring (6) being of elongated form, each of said nuclear fuel elements being held by at least one spring (6) against at least one rigid support formed in the wall of a honeycomb structure traversed by said fuel element, said honeycomb structure being formed by the intersection of two groups of sheets (1, 2), the members of each group being parallel to one another and perpendicular to the other group, the assemblage of the two groups of sheets (1, 2) constituting the grid, said sheets comprising pairs of retaining bridges (8) for holding the spring (6) against each of the sheets, said apparatus being characterized in that it comprises two other bridges (10), external of the retaining bridges, constituting stops for preventing longitudinal movement of the spring, a double protrusion (12) formed in the sheet next to each retaining bridge (8) ensuring lateral positioning of the spring (6).

2. Apparatus for fixing a spring according to Claim 1 intended for an outer plate of a spacer grid for fuel elements of a nuclear reactor, and modified in that each of the said retaining bridges is replaced by two tongues (28a, 28b) bendable into position after installation of the spring, and in that the double guidance protrusions are each replaced by at least one slot (32) of the same size as the spring (6) formed in the sheet parallel to the longitudinal axis of the spring (6) whereby precisely to locate the sides of said spring.

3. Apparatus for fixing a spring according to Claim 2, characterized in that it comprises two slots (32) formed in the sheet constituting the wall of the honeycomb structure on either side of the opening resulting from cutting the two bendable tongues.

**Ansprüche**

1. Vorrichtung zum Befestigen einer Feder auf dem Abstandshaltegitter für Kernbrennelemente, wobei die Feder (6) eine längliche Form hat, jedes der Kernbrennelemente von wenigstens einer Feder (6) gegen wenigstens eine starre Abstützung gehalten ist, die in der von dem Brennelement überquerten Wand einer Zelle ausgebildet ist, und wobei die Zellen durch den Schnitt zweier Gruppen von Blechen (1, 2) gebildet sind, die jeweils in jeder Gruppe parallel verlaufen und zwischen zwei Gruppen aufeinander senkrecht stehen, wobei die zwei Gruppen von Blechen (1, 2) das Gitter bilden und diese Bleche Paare von Brücken (8) zum Halten der Feder (6) gegen jedes der Bleche umfassen, dadurch gekennzeichnet, daß außerhalb der Brücken zum Halten zwei weitere Brücken (10) vorgesehen sind, die Anschläge zum Beenden der Längsbewegung der Feder (6) darstellen, und daß eine zweiteilige Ausbuchtung (12) in dem Blech an den Anstiegen einer jeden Brücke (8) zum Halten ausgebildet ist, die eine Führung in Querrichtung der Feder (6) sicherstellen.

2. Vorrichtung zum Befestigen einer Feder nach Anspruch 1, die für eine äußere Platte eines Abstandshaltegitters für Kernbrennelemente vorgesehen und dahingehend abgeändert ist, daß die genannten Brücken zum Halten jeweils durch zwei Zungen (28a, 28b) ersetzt sind, die nach dem Inlagebringen der Feder umlegbar sind, und daß die zweiteiligen Führungsausbuchtungen jeweils von wenigstens einer Aussparung (32) mit der gleichen Breite wie diejenige der Feder (6) ersetzt sind, wobei die Aussparung in dem Blech in Richtung der Längsachse der Feder (6) vorgenommen ist und durch ihre Ränder die Feder genau in Querrichtung führt.

3. Vorrichtung zum Befestigen einer Feder nach Anspruch 2, dadurch gekennzeichnet, daß sie zwei Aussparungen (32) umfaßt, die in dem die Wand der Zelle bildenden Blech auf beiden Seiten der Öffnung ausgebildet sind, die sich durch das Ausschneiden der zwei umlegbaren Zungen ergibt.

0 025 393

FIG. 1

FIG. 2